# EUROPÄISCHE PATENTSCHRIFT

(11) **EP 4 212 274 B1**
(45) Veröffentlichungstag und Bekanntmachung des Hinweises auf die Patenterteilung: **15.10.2025**
(21) Anmeldenummer: 23151797.0
(22) Anmeldetag: 16.01.2023
(51) Int. Cl.: B23D 47/12, B28D 1/04

(54) **MATERIALTRENNVORRICHTUNG**
MATERIAL CUTTING DEVICE
DISPOSITIF DE COUPE DE MATÉRIAUX

(30) Priorität: 18.01.2022 DE 102022101073
(43) Veröffentlichungstag der Anmeldung: 19.07.2023
(73) Patentinhaber: Wacker Neuson Produktion GmbH & Co. KG, 85084 Reichertshofen (DE)
(72) Erfinder: STEFFEN, Michael, 80796 München (DE); BERGER, Rudolf, 82031 Grünwald (DE); WEICHSELBAUMER, Katrin, 85301 Schweitenkirchen (DE)
(74) Vertreter: Müller Hoffmann & Partner

(56) Entgegenhaltungen:
- WO-A1-2010/114545
- CN-A- 107 553 602
- SU-A1- 1 726 273
- US-A1- 2009 107 476
- DATABASE WPI Week 199311, Derwent World Patents Index; AN 1993-092293, XP002809255

## Beschreibung

Die Erfindung betrifft eine Materialtrennvorrichtung, wie z.B. einen Fugenschneider, einen Trennschleifer, eine Trennsäge oder eine Kettensäge. Die Materialtrennvorrichtung kann auf einem Gestell verfahrbar oder auch handgehalten sein.

Ein als derartige Materialtrennvorrichtung dienender typischer fahrbarer Fugenschneider mit Riementrieb ist aus der DE 10 2014 010 354 A1 bekannt.

Der Fugenschneider weist eine drehbare Werkzeugaufnahme auf, die die als Werkzeug dienende Schneidscheibe trägt. Die Werkzeugaufnahme wird in der Regel über einen Riementrieb angetrieben, der seinerseits von einem Verbrennungs- oder Elektromotor angetrieben wird. Der Motor ist dabei oberhalb und - in Fahrtrichtung gesehen - hinter der Schneidachse angeordnet.

Die für den praktischen Einsatz relevante Schnitttiefe nach unten (bei bestimmungsgemäßer Arbeitsstellung des Fugenschneiders) und nach vorne wird durch den Schneidscheibenradius und im Idealfall nur durch den Radius der Werkzeugaufnahme (Spannaufnahme) für die Schneidscheibe begrenzt. Dementsprechend ist es vorteilhaft, wenn der Durchmesser der abtriebseitigen Riemenscheibe nicht größer ist als der Durchmesser der die Schneidscheibe tragenden Werkzeugaufnahme.

Aus Platzgründen muss bei dieser Bauweise der Antriebsmotor in der Regel hinter der Schneidwelle versetzt angebracht sein, damit er nicht nach vorne übersteht. Dabei ist die Fahrtrichtung nach vorne die Hauptschneidrichtung, in die der Fugenschneider verfahren wird. Dementsprechend wirkt nur ein Teil der Masse des Motors, um als Schneidauflast zu dienen und somit einem Aufsteigen der Schneidscheibe aus dem Material entgegenzuwirken. Aufgrund der Drehrichtung der Schneidscheibe besteht nämlich die Tendenz, dass sich die Schneidscheibe aus dem zu schneidenden Material anhebt.

Der Riementrieb oder auch eine andere Drehmomentübertragung erfordert baulichen Aufwand, was mit zusätzlichen Kosten und einer Reduzierung des Gesamtwirkungsgrades verbunden ist.

Ein Direktantrieb der Werkzeugaufnahme ohne zwischengeschaltete Drehmomentübertragung ist möglich. Dazu kann insbesondere ein Elektromotor direkt an der Schneidwelle angebracht werden. Jedoch weisen übliche Elektromotoren eine für den hohen Leistungs- und Drehmomentbedarf erforderliche Größe auf, die einen entsprechend großen Außendurchmesser des Stators bzw. des Motorgehäuses erfordert. Dieser Außendurchmesser ist in der Regel größer als der Durchmesser typischer Spannaufnahmen für die Schneidscheiben. Dadurch verringert sich die mögliche Schnitttiefe.

Aus CN 107 553 602 A ist eine Sägevorrichtung bekannt, bei der der Rotor eines die Vorrichtung antreibenden Elektromotors und das Sägeblatt eine bauliche Einheit bilden. Der Rotor ist in das Sägeblatt integriert. Der Stator des Elektromotors umschließt den Rotor bzw. das Sägeblatt über einen Winkel von weniger als 180 Grad. CN 107 553 602 A zeigt eine Materialtrennvorrichtung nach dem Oberbegriff des anhängenden Anspruchs 1.

Eine ähnliche Anordnung ist aus der SU 1 726 273 A1 bekannt.

Der Erfindung liegt eine Aufgabe zugrunde, eine Materialtrennvorrichtung anzugeben, bei der die beim Stand der Technik vorhandenen Nachteile vermieden werden.

Erfindungsgemäß wird die Aufgabe gelöst durch eine Materialtrennvorrichtung mit den Merkmalen von Anspruch 1. Vorteilhafte Ausgestaltungen sind in den abhängigen Ansprüchen angegeben.

Eine Materialtrennvorrichtung weist eine drehbar gelagerte Werkzeugaufnahme auf, ausgebildet zum Tragen eines Trennwerkzeugs. Weiterhin weist die Materialtrennvorrichtung einen Antrieb zum Drehen der Werkzeugaufnahme auf, wobei der Antrieb einen Elektromotor aufweist, mit einem Rotor und einem Stator, wobei die Drehachse des Rotors des Elektromotors und die Drehachse der Werkzeugaufnahme koaxial zueinander angeordnet sind, und wobei der Stator den Rotor über einen Winkel von weniger als 360° umschließt.

Bei der Materialtrennvorrichtung kann es sich z.B. um einen Fugenschneider, einen Trennschleifer, eine Trennsäge oder eine Kreissäge handeln. Dementsprechend kann das Trennwerkzeug z.B. eine Schneidscheibe oder eine Sägescheibe sein.

Als Antrieb ist ein Elektromotor vorgesehen, der auf der Schneidwelle angeordnet ist, so dass die Drehachse des Rotors koaxial zu der Drehachse der Werkzeugaufnahme liegt. Auf diese Weise ist keine Drehmomentübersetzung oder Drehmomentwandeleinrichtung, wie z.B. ein Riementrieb, erforderlich. Vielmehr treibt der Elektromotor die Werkzeugaufnahme und damit das Trennwerkzeug direkt an.

Als Elektromotor wird jedoch kein herkömmlicher Motor eingesetzt, sondern ein Elektromotor, bei dem sich der Stator über einen Winkel von weniger als 360° erstreckt. Der Stator umschließt somit den Rotor nicht vollständig, z.B. ring- oder rohrartig, wie bei einem herkömmlichen Elektromotor. Vielmehr kann der Elektromotor ein Segmentmotor sein, bei dem sich der Stator nur in einem oder mehreren Segmenten befindet.

Auf diese Weise ist es möglich, die Bauart des Elektromotors derart zu gestalten, dass sich der Stator wenigstens an einer Seite (z.B. nach unten) nicht über den Rotordurchmesser hinaus erstreckt.

Der Elektromotor kann eine Reluktanzmaschine sein, insbesondere eine Synchron-Reluktanzmaschine. Dabei hat sich eine Synchron-Reluktanzmaschine mit einem segmentierten Stator als besonders geeignet erwiesen, bei dem sich der Stator nur über einen bestimmten Winkelbereich erstreckt (Statorblock).

Der Elektromotor kann auf diese Weise derart gestaltet werden, dass sich der Stator und der Rotor einschließlich deren Gehäuse (Elektromotorgehäuse) in Schnittrichtung nach unten und nach vorne (in Fahrtrichtung) nicht über den Durchmesser der Werkzeugaufnahme (z.B. einer Spannaufnahme) hinaus ragend erstrecken.

Da keine Drehmomentübersetzung bzw. Drehmomentwandlung erforderlich ist, können erheblicher Bauaufwand und damit Kosten gespart werden. Die Materialtrennvorrichtung kann durch den Wegfall der Drehmomentübertragung einen höheren Gesamtwirkungsgrad aufweisen, wobei die Schnitttiefe nicht über die Begrenzung durch die Werkzeugaufnahme hinaus verringert wird. Zudem ist der Elektromotor auf einer gemeinsamen Achse mit der Werkzeugaufnahme angeordnet, so dass die durch die gesamte Masse des Elektromotors bewirkte Gewichtskraft als Gegenkraft gegen die beim Trennbetrieb wirkenden Kräfte genutzt werden kann. Insbesondere drückt der Elektromotor das Trennwerkzeug nach unten in das zu trennende Material.

Der Stator umschließt den Rotor über einen Winkel von weniger als 360°. Damit kann der Motorstator nicht mehr als geschlossenes Rotationsteil bzw. als geschlossener Ring ausgeführt sein, sondern sich nur noch über einen bestimmten Winkelbereich erstrecken. Der Stator kann dementsprechend als Statorsegment oder Statorblock ausgeführt sein und sich über einen Winkel von z.B. 270° oder weniger, 180° oder weniger, 120° oder weniger oder 90° oder weniger erstrecken. In der Praxis hat sich eine Umschließung von etwa 180° als gut geeignet erwiesen.

Dementsprechend ist es auch möglich, mehrere Statorsegmente bzw. Statorblöcke am Umfang des Rotors zu verteilen, wodurch die Leistungsfähigkeit des Motors und insbesondere das Drehmoment des Motors vergrößert werden kann.

Der Winkelbereich, über den sich das Statorsegment bzw. gegebenenfalls die mehreren Statorsegmente erstrecken, ist dabei so gewählt, dass der Stator jedenfalls nicht die nutzbare Schneidtiefe beeinträchtigt. Insbesondere erstreckt sich der Stator nicht in Richtung des Schneidorts (Trennort) über den Durchmesser der Werkzeugaufnahme hinaus.

Der Stator kann sich über einen Winkel erstrecken, der derart bemessen ist, dass sich der Stator ausschließlich auf einer Seite einer Grenzfläche befindet, wobei die Grenzfläche als virtuelle Tangentialfläche an einer Außenseite der Werkzeugaufnahme definiert ist.

Die Grenzfläche kann dementsprechend als virtuelle (gedachte) Tangentialfläche definiert sein, die an der Außenseite der Werkzeugaufnahme (insbesondere an deren Unterseite) tangential anliegt. Der Stator sollte sich nicht über diese Grenzfläche hinaus erstrecken, um nicht die nutzbare Schneidtiefe zu verringern. Die Schneidtiefe (Trenntiefe) sollte vielmehr in diesem Bereich allein durch den Durchmesser der Werkzeugaufnahme begrenzt sein. Bauteile des Elektromotors, also hier insbesondere der Stator, sollen sich nicht über die Werkzeugaufnahme in Richtung des Schneidorts (Trennort) erstrecken.

Bei einer Ausführungsform kann die Grenzfläche eine virtuelle Horizontalebene sein, die als Tangentialfläche an einer Unterseite der Werkzeugaufnahme definiert ist, wenn die Materialtrennvorrichtung in einer bestimmungsgemäßen Stellung steht. In diesem Fall kann es sich bei der Materialtrennvorrichtung z.B. um einen Fugenschneider handeln, bei dem sich die als Werkzeug dienende Trennscheibe im Wesentlichen nach unten erstreckt, um dort das Material zu schneiden.

In diesem Fall begrenzt die Grenzfläche die Kontur des Stators nach unten. Der Stator darf sich dementsprechend nicht über die Grenzfläche hinaus nach unten erstrecken bzw. über diese Grenzfläche hinaus nach unten überstehen. Vielmehr soll der Stator ausschließlich oberhalb der Grenzfläche angeordnet sein.

Das unterste Niveau, bis zu dem sich der Stator nach unten erstrecken darf, wird somit insbesondere durch die zylindrische Außenseite der Werkzeugaufnahme definiert.

Die Anforderung an den Stator gilt dementsprechend auch gegebenenfalls für ein Gehäuse, das als Elektromotorgehäuse dient und den Stator wenigstens teilweise umschließt.

Die Werkzeugaufnahme kann im Wesentlichen rotationssymmetrisch ausgebildet sein, wobei die Werkzeugaufnahme einen maximalen Radius aufweist (Spannaufnahmeradius), und wobei sich der Stator in einer Richtung nach unten und in einer Richtung nach vorne nicht über den maximalen Radius der Werkzeugaufnahme hinaus erstreckt, wenn die Materialtrennvorrichtung in einer bestimmungsgemäßen Arbeitsstellung steht. Die bestimmungsgemäße Arbeitsstellung ist dabei insbesondere abhängig von der Bauart der Materialtrennvorrichtung. Wenn die Materialtrennvorrichtung als Fugenschneider ausgebildet ist, handelt es sich bei der Hauptfahrtrichtung um eine Fahrtrichtung nach vorne. Die Schneidwirkung wird nach unten erzeugt.

Die Materialtrennvorrichtung kann eine Fugenschneidvorrichtung sein, mit einem Fahrgestell und mit wenigstens einem Fahrwerk zum Verfahren des Fahrgestells, wobei der Elektromotor und die Werkzeugaufnahme in einem, in der Hauptfahrtrichtung gesehen, vorderen Bereich des Fahrgestells angeordnet sind, und wobei ein elektrischer Energiespeicher vorgesehen ist, zum Versorgen des Elektromotors mit elektrischer Energie.

Das Fahrwerk kann z.B. eine Achse mit zwei Rollen aufweisen. Dabei ist es möglich, das Fahrgestell um das Fahrwerk zu kippen. In der Regel wird das Fahrwerk jedoch zwei Achsen aufweisen, die jeweils zwei Rollen aufweisen, so dass die gesamte Fugenschneidvorrichtung auf vier Rollen verfahrbar ist. Zudem kann an dem Fahrgestell auch ein Führungshandgriff vorgesehen sein, an dem ein Bediener die Materialtrennvorrichtung bewegen kann.

Der Schwerpunkt des elektrischen Energiespeichers kann oberhalb der Drehachse der Werkzeugaufnahme angeordnet sein. Dies führt vorteilhaft dazu, dass das Gewicht des elektrischen Energiespeichers, z.B. eines Akkus, das Schneidwerkzeug nach unten in das zu trennende Material drückt. Damit kann der häufig zu beobachtenden Aufwärtsbewegung entgegengewirkt werden, die beim Schneidbetrieb durch Rotation des Trennwerkzeugs auftritt.

Der Schwerpunkt des Akkus sollte dabei insgesamt näher an einem Bereich senkrecht oberhalb der Motordrehachse (und damit auch der Werkzeugdrehachse) als an einem Bereich oberhalb einer Drehachse der Rollen des Fahrgestells angeordnet sein. Insbesondere sollte der Schwerpunkt möglichst weit nach vorne, in Fahrtrichtung, platziert werden, um die gewünschte Niederhaltung des Trennwerkzeugs zu erreichen.

Bei einer Variante kann der Schwerpunkt des elektrischen Energiespeichers im Wesentlichen senkrecht oberhalb der Drehachse angeordnet sein, so dass das Gewicht des Energiespeichers bestmöglich wirkt, um die Schneidscheibe niederzudrücken.

Es kann eine Akkuaufnahme vorgesehen sein, zum Aufnehmen des elektrischen Energiespeichers, wobei der elektrische Energiespeicher auswechselbar sein kann. Die Akkuaufnahme nimmt dabei den Energiespeicher auswechselbar auf, so dass ein verbrauchter Akku sehr einfach und schnell gegen einen frischen Akku ausgetauscht werden kann.

Das Fahrgestell kann, bezogen auf eine bestimmungsgemäße Arbeitsstellung, einen unteren Bereich auf Höhe des Elektromotors und der Werkzeugaufnahme aufweisen, wobei das Fahrgestell auch einen oberen Bereich aufweisen kann, der oberhalb von dem unteren Bereich angeordnet ist und von dem unteren Bereich um wenigstens 400 mm beabstandet ist. Der untere und der obere Bereich eröffnen Möglichkeiten, die für die elektrische Energieversorgung erforderlichen Bauteile an der Fugenschneidvorrichtung geeignet zu platzieren. So kann z.B. der Acku im unteren Bereich und eine Umformereinrichtung im oberen Bereich angeordnet werden. Sinnvollerweise wird auch der Führungsbügel zum Führen der Maschine durch einen Bediener am oberen Bereich angebracht sein.

In dem oberen oder in dem unteren Bereich kann dementsprechend eine Umformereinrichtung vorgesehen sein, zum Umformen eines elektrischen Gleichstroms aus dem elektrischen Energiespeicher in einen für den Betrieb des Elektromotors geeigneten Strom.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in Seitenansicht eine erfindungsgemäße Materialtrennvorrichtung als Fugenschneider;
- **Fig. 2**: eine Ausschnittsvergrößerung des bei dem Fugenschneider von Fig. 1 verwendeten Elektromotors;
- **Fig. 3**: eine Untersicht des Fugenschneiders von Fig. 1;
- **Fig. 4**: eine Rückansicht des Fugenschneiders von Fig. 1;
- **Fig. 5**: eine Variante zu dem Fugenschneider von Fig. 1;
- **Fig. 6**: eine Untersicht des Fugenschneiders von Fig. 5;
- **Fig. 7**: eine Rückansicht des Fugenschneiders von Fig. 5; und
- **Fig. 8**: in schematischer Darstellung eine Kreissäge als weitere Ausführungsform einer erfindungsgemäßen Materialtrennvorrichtung.

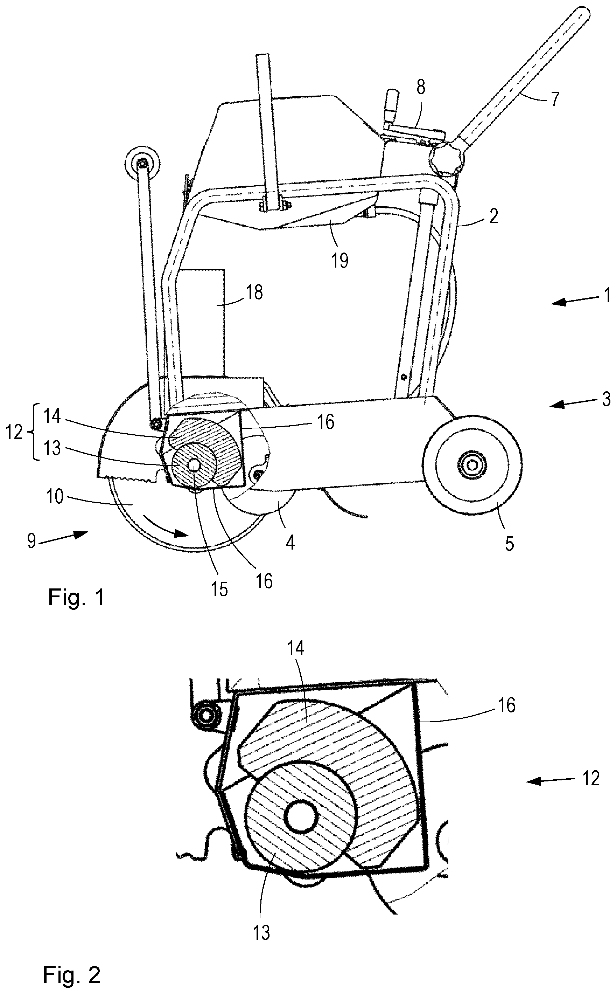

Die Fig. 1 bis 4 zeigen eine erste Variante eines Fugenschneiders als erfindungsgemäße Materialtrennvorrichtung.

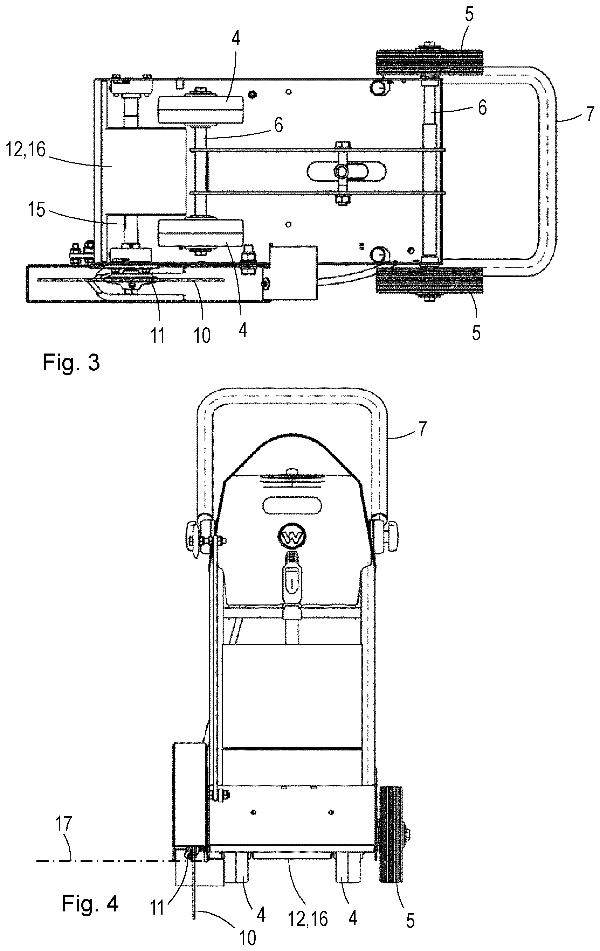

Der Fugenschneider weist ein Fahrgestell 1 mit einem Fahrgestellrahmen 2 und einem Fahrwerk 3 auf. An dem Fahrwerk 3 sind jeweils zwei Vorderräder 4 und zwei Hinterräder 5 vorgesehen, die jeweils an einer Achse 6 angeordnet sind (Fig. 3).

Im oberen Bereich des Fahrgestells 1 bzw. des Fahrgestellrahmens 2 ist ein Führungshandgriff 7 höhenverschwenkbar angebracht, über den ein Bediener den Fugenschneider führen bzw. schieben oder verfahren kann.

Je nach Ausführungsform kann das Fahrwerk 3 durch eine Abdeckung abgedeckt sein, so dass die Ober- und Seitenflächen glatt sind, wie z.B. in Fig. 1 gezeigt.

Im oberen Bereich des Fahrgestells 1 ist zudem eine Höhenverstellung 8 vorgesehen, die im gezeigten Beispiel als Kurbel ausgebildet ist und mit der ein Bediener die Absenkung einer Schneidvorrichtung 9 relativ zu dem restlichen Fahrgestell 1 in an sich bekannter Weise einstellen kann.

Die Schneidvorrichtung 9 weist eine als Trennwerkzeug dienende Schneidscheibe 10 auf, die in einer als Werkzeugaufnahme dienenden Spannaufnahme 11 drehbar gehalten ist. Die Schneidscheibe 10 kann bei Bedarf ausgewechselt werden, wozu sich die Spannaufnahme 11 einfach öffnen und schließen lässt.

Koaxial zu der Spannaufnahme 11 ist ein als Antrieb dienender Elektromotor 12 vorgesehen, mit einem Rotor 13 und einem Stator 14. Eine Rotorwelle 15 des Rotors 13 erstreckt sich bis zu der Spannaufnahme 11, so dass die Spannaufnahme 11 direkt durch den Rotor 13 drehend angetrieben werden kann.

Bei herkömmlichen Elektroantrieben würde der Stator 14 den Rotor 13 vollständig kreisringartig umschließen. Bei der erfindungsgemäßen Materialtrennvorrichtung hingegen ist der Elektromotor 12 als Segmentmotor ausgebildet, wobei sich der Stator 14 nur über einen begrenzten Winkelbereich kleiner als 360° erstreckt. Im gezeigten Beispiel von Fig. 1 und - als Ausschnittsvergrößerung - Fig. 2 ist erkennbar, dass sich der Stator lediglich über einen Winkelbereich (Segment) von ca. 180° um den Rotor 13 erstreckt.

Rotor 13 und Stator 14 sind zudem von einem Gehäuse 16 umschlossen. Dabei ist deutlich erkennbar, dass das Gehäuse 16 sehr kompakt sein kann, aufgrund der geringen Baugröße des sich nur über ein Segment erstreckenden Stators 14.

Insbesondere in Fig. 2 ist erkennbar, dass sich der Stator 14 nach unten nicht weiter erstreckt als der Rotor 13. Bei einem herkömmlichen Elektromotor mit ringförmigem Stator würde der Stator auch unterhalb des Rotors 13 erheblichen Bauraum beanspruchen. Dies ist bei der in den Fig. 1 und 2 gezeigten Lösung hingegen nicht der Fall. Insbesondere nach unten ist der Bauraum auf den Durchmesser des Rotors 13 (und das umhüllende Gehäuse 16) beschränkt. Mehr Bauraum wird nach unten nicht in Anspruch genommen.

Wenn der Rotordurchmesser (einschließlich des Gehäuses 16) geringer, jedenfalls nicht größer, ist als der Durchmesser der Werkzeugaufnahme bzw. Spannaufnahme 11, ist alleine der Durchmesser der Spannaufnahme 11 der begrenzende Faktor für die Schnitttiefe. Die Schneidscheibe 10 kann somit sehr tief in das zu trennende Material eindringen. Die Eindringtiefe wird lediglich durch den Durchmesser der Spannaufnahme 11 begrenzt. Die Bauweise des Elektromotors 12 erfordert keine Einschränkung der Eindringtiefe bzw. Schneidtiefe.

Dieser Zusammenhang ist auch in Fig. 4 gezeigt. Dort sind in der Rückansicht die Spannaufnahme 11 und der Elektromotor 12 nebeneinander erkennbar. Insbesondere ist erkennbar, dass sich der Elektromotor 12 und damit der Stator 14 einschließlich dem Gehäuse 16 nicht über eine virtuelle Horizontalebene 17 hinaus nach unten erstrecken, die an der Unterseite der Werkzeugaufnahme 11 tangential definiert ist und sich senkrecht zur Zeichenebene erstreckt. Damit reduziert der Elektromotor 12 nicht die mögliche Eindringtiefe der Schneidscheibe 10 nach unten.

Im unteren Bereich des Fahrgestells 1 ist ein Akku 18 als elektrischer Energiespeicher angeordnet. Der Akku 18 kann insbesondere auswechselbar in einer entsprechenden Akkuaufnahme angebracht sein, so dass er bei Bedarf schnell gegen einen frischen Akku 18 ausgetauscht werden kann.

Im oberen Bereich des Fahrgestells 1 ist ein Umformer 19 angeordnet, der dazu dient, den aus dem Akku 18 bezogenen Gleichstrom in einen geeigneten Strom für den Elektromotor 12 umzuformen. Dies ist vor allem dann erforderlich, wenn es sich bei dem Elektromotor 12 um einen Reluktanzmotor, insbesondere eine Synchron-Reluktanzmaschine mit einem segmentierten Stator handelt.

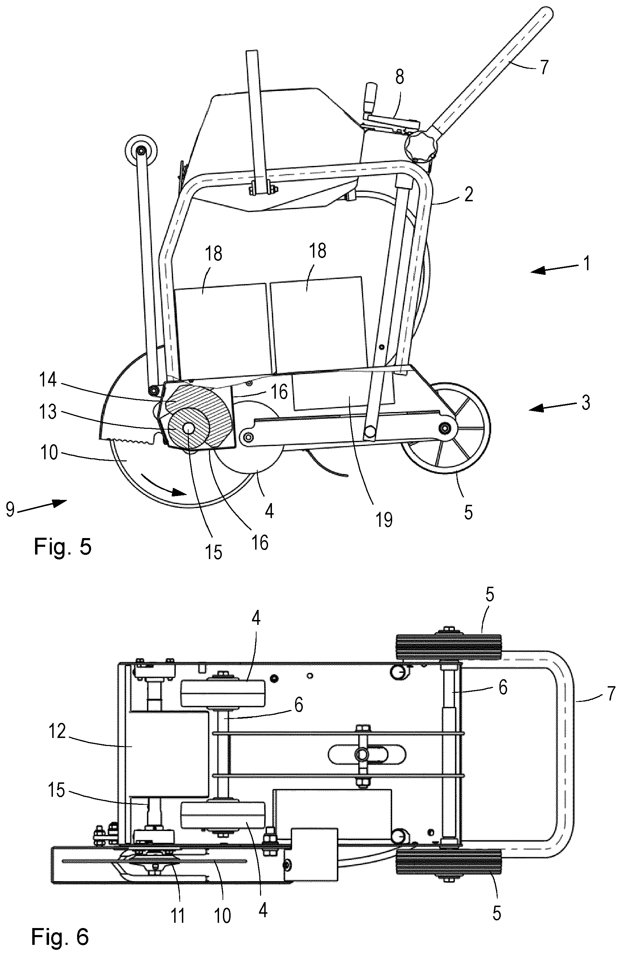

Die Fig. 5 bis 7 zeigen eine Variante für einen Fugenschneider als Materialtrennvorrichtung.

Der dort gezeigte Fugenschneider stimmt im Wesentlichen mit dem Fugenschneider der Fig. 1 bis 4 überein. In dem gezeigten Beispiel ist jedoch der Akku 18 fest verbaut. Zudem ist der Umformer 19 ebenfalls im unteren Bereich des Fahrgestells 1 angeordnet.

Der Aufbau des Elektromotors 12 hingegen ist identisch mit dem der Fig. 1 bis 4.

Insbesondere die Anordnung des Akkus 18 oberhalb der Spannaufnahme 11 und des koaxial dazu angeordneten Rotors 13 bewirkt, dass die Masse des Akkus 18 im Betrieb des Fugenschneiders die Schneidscheibe 10 nach unten in das zu trennende Material drückt. Die Schneidscheibe 10 selbst bewirkt eine Aufstiegstendenz aufgrund der Drehbewegung der Schneidscheibe (Pfeilrichtung in Fig. 5) und der Reibung gegen das zu trennende Material. Dieser Aufwärtsbewegung wirkt das Gewicht des Akkus 18 und auch des Umformers 19 entgegen.

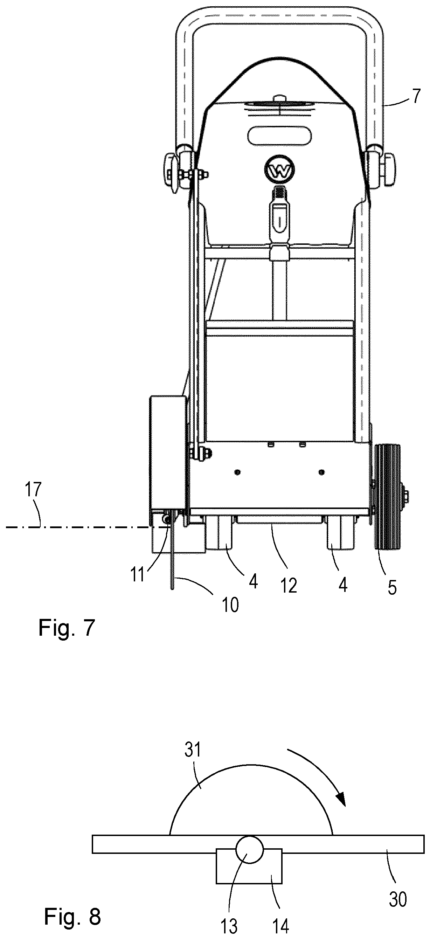

Fig. 8 zeigt in schematischer Darstellung eine Kreissäge als weiteres Beispiel für eine Materialtrennvorrichtung.

Die Kreissäge weist einen Sägetisch 30 auf, in dem eine als Trennwerkzeug dienende Sägescheibe 31 mit Hilfe einer nicht dargestellten Werkzeugaufnahme (Scheibenaufnahme) drehbar gehalten ist.

Die Werkzeugaufnahme wird direkt durch einen koaxial zu der Werkzeugaufnahme angeordneten Elektromotor, mit einem Rotor 13 und einem Stator 14 drehend angetrieben.

Auch bei diesem Beispiel ist der Stator 14 als segmentierter Stator 14 ausgebildet und umschließt den Rotor 13 über einen Winkel von weniger als 360°. Im gezeigten Beispiel von Fig. 8 erstreckt sich der Stator 33 über einen Winkel von etwa 180°, analog zu dem Stator der Fig. 1 und 2.

Auch bei dieser Ausführungsform ist somit gewährleistet, dass die Werkzeugaufnahme mit der Sägescheibe 31 durch einen Motor direkt koaxial angetrieben werden kann, ohne dass der Elektromotor die nutzbare Schneidhöhe (freier Bereich der Sägescheibe 31 oberhalb des Sägetischs 30) beeinträchtigt oder verringert.

## Patentansprüche

1. Materialtrennvorrichtung, mit
- einer drehbar gelagerten Werkzeugaufnahme (11), ausgebildet zum Tragen eines Trennwerkzeugs (10); und mit
- einem Antrieb zum Drehen der Werkzeugaufnahme (11);
wobei
- der Antrieb einen Elektromotor (12) aufweist, mit einem Rotor (13) und einem Stator (14);
- die Drehachse des Rotors (13) des Elektromotors (12) und die Drehachse der Werkzeugaufnahme (11) koaxial angeordnet sind;
und wobei
- der Stator (14) den Rotor (13) über einen Winkel von weniger als 360 Grad umschließi,
**dadurch gekennzeichnet, dass** der Elektromotor (12) auf der Drehachse der Werkzeugaufnahme (11) angeordnet ist, derart, dass die Werkzeugaufnahme (11) direkt durch den Rotor (13) antreibbar ist.

2. Materialtrennvorrichtung nach Anspruch 1, wobei der Stator (14) den Rotor (13) über einen Winkel von 270° oder weniger, 180° oder weniger, 120° oder weniger oder 90° oder weniger umschließt.

3. Materialtrennvorrichtung nach einem der vorstehenden Ansprüche, wobei
- der Stator (14) sich über einen Winkel erstreckt, der derart bemessen ist, dass sich der Stator (14) ausschließlich auf einer Seite einer Grenzfläche (17) erstreckt; und wobei
- die Grenzfläche (17) als virtuelle Tangentialfläche an einer Außenseite der Werkzeugaufnahme (11) definiert ist.

4. Materialtrennvorrichtung nach einem der vorstehenden Ansprüche, wobei die Grenzfläche (17) eine virtuelle Horizontalebene ist, die als Tangentialfläche an einer Unterseite der Werkzeugaufnahme (11) definiert ist, wenn die Materialtrennvorrichtung in einer bestimmungsgemäßen Arbeitsstellung steht.

5. Materialtrennvorrichtung nach einem der vorstehenden Ansprüche, wobei
- die Werkzeugaufnahme (11) im Wesentlichen rotationssymmetrisch ausgebildet ist;
- die Werkzeugaufnahme (11) einen maximalen Radius aufweist; und wobei
- der Stator (14) sich in einer Richtung nach unten und in einer Richtung nach vorne nicht über den maximalen Radius der Werkzeugaufnahme (11) hinaus erstreckt, wenn die Materialtrennvorrichtung in einer bestimmungsgemäßen Arbeitsstellung steht.

6. Materialtrennvorrichtung nach einem der vorstehenden Ansprüche, wobei die Materialtrennvorrichtung eine Fugenschneidvorrichtung ist, mit
- einem Fahrgestell (1); und mit
- wenigstens einem Fahrwerk (3) zum Verfahren des Fahrgestells (1);
wobei
- der Elektromotor (12) und die Werkzeugaufnahme (11) in einem, in einer Hauptfahrtrichtung gesehen, vorderen Bereich des Fahrgestells (1) angeordnet sind; und wobei
- ein elektrischer Energiespeicher (18) vorgesehen ist, zum Versorgen des Elektromotors (12) mit elektrischer Energie.

7. Materialtrennvorrichtung nach Anspruch 6, wobei der Schwerpunkt des elektrischen Energiespeichers (18) oberhalb der Drehachse der Werkzeugaufnahme (11) angeordnet ist.

8. Materialtrennvorrichtung nach Anspruch 6 oder 7, wobei
- eine Akkuaufnahme vorgesehen ist, zum Aufnehmen des elektrischen Energiespeichers (18); und wobei
- der elektrische Energiespeicher (18) auswechselbar ist.

9. Materialtrennvorrichtung nach einem der Ansprüche 6 bis 8, wobei
- das Fahrgestell (1), bezogen auf eine bestimmungsgemäße Arbeitsstellung, einen unteren Bereich auf Höhe des Elektromotors (12) und der Werkzeugaufnahme (11) aufweist; und wobei
- das Fahrgestell (1) einen oberen Bereich aufweist, der oberhalb von dem unteren Bereich angeordnet ist und von dem unteren Bereich wenigstens 400 mm beabstandet ist.

10. Materialtrennvorrichtung nach einem der Ansprüche 6 bis 9, wobei in dem oberen oder in dem unteren Bereich eine Umformereinrichtung (19) vorgesehen ist, zum Umformen eines elektrischen Gleichstroms aus dem elektrischen Energiespeicher (18) in einen für den Betrieb des Elektromotors (12) geeigneten Strom.

## Claims

1. Material cutting apparatus, comprising
- a rotatably mounted tool holder (11), configured to carry a cutting tool (10); and comprising
- a drive for rotating the tool holder (11);
wherein
- the drive has an electric motor (12), including a rotor (13) and a stator (14);
- the axis of rotation of the rotor (13) of the electric motor (12) and the axis of rotation of the tool holder (11) are arranged coaxially;
and wherein
- the stator (14) encloses the rotor (13) over an angle of less than 360 degrees, **characterised in that** the electric motor (12) is arranged on the axis of rotation of the tool holder (11) such that the tool holder (11) can be driven directly by the rotor (13).

2. Material cutting apparatus as claimed in claim 1, wherein the stator (14) encloses the rotor (13) over an angle of 270° or less, 180° or less, 120° or less or 90° or less.

3. Material cutting apparatus as claimed in any one of the preceding claims, wherein
- the stator (14) extends over an angle of such a size that the stator (14) extends exclusively on one side of a boundary surface (17); and wherein
- the boundary surface (17) is defined as a virtual tangential surface on an outer side of the tool holder (11).

4. Material cutting apparatus as claimed in any one of the preceding claims, wherein the boundary surface (17) is a virtual horizontal plane which is defined as a tangential surface on an underside of the tool holder (11) when the material cutting apparatus is in an intended working position.

5. Material cutting apparatus as claimed in any one of the preceding claims, wherein
- the tool holder (11) is substantially rotationally symmetrical;
- the tool holder (11) has a maximum radius; and wherein
- in a downward direction and in a forward direction the stator (14) does not extend beyond the maximum radius of the tool holder (11) when the material cutting apparatus is in an intended working position.

6. Material cutting apparatus as claimed in any one of the preceding claims, wherein the material cutting apparatus is a joint cutting apparatus, comprising
- a chassis (1); and comprising
- at least one running gear unit (3) for moving the chassis (1);
wherein
- the electric motor (12) and the tool holder (11) are arranged in a front region of the chassis (1) as seen in a main direction of travel; and wherein
- an electric energy storage device (18) is provided in order to supply the electric motor (12) with electric energy.

7. Material cutting apparatus as claimed in claim 6, wherein the centre of gravity of the electric energy storage device (18) is arranged above the axis of rotation of the tool holder (11).

8. Material cutting apparatus as claimed in claim 6 or 7, wherein
- a battery holder is provided in order to hold the electric energy storage device (18); and wherein
- the electric energy storage device (18) is replaceable.

9. Material cutting apparatus as claimed in one of claims 6 to 8, wherein
- the chassis (1) has, with respect to an intended working position, a lower region at the level of the electric motor (12) and the tool holder (11); and wherein
- the chassis (1) has an upper region which is arranged above the lower region and is spaced apart at least 400 mm from the lower region.

10. Material cutting apparatus as claimed in any one of claims 6 to 9, wherein a converter device (19) is provided in the upper region or in the lower region in order to convert an electric direct current from the electric energy storage device (18) into a current suitable for operating the electric motor (12).

## Revendications

1. Dispositif de séparation de matériaux, comprenant
un porte-outil (11) monté de manière rotative, conçu pour porter un outil de séparation (10) ; et
un entraînement pour faire tourner le porte-outil (11) ;
dans lequel
l'entraînement comportant un moteur électrique (12) avec un rotor (13) et un stator (14) ;
l'axe de rotation du rotor (13) du moteur électrique (12) et l'axe de rotation du porte-outil (11) sont agencés de manière coaxiale ;
et dans lequel
le stator (14) entoure le rotor (13) selon un angle inférieur à 360 degrés, **caractérisé en ce que** le moteur électrique (12) est agencé sur l'axe de rotation du porte-outil (11) de telle sorte que le porte-outil (11) peut être entraîné directement par le rotor (13).

2. Dispositif de séparation de matériaux selon la revendication 1, dans lequel le stator (14) entoure le rotor (13) selon un angle de 270° ou moins, 180° ou moins, 120° ou moins ou 90° ou moins.

3. Dispositif de séparation de matériaux selon l'une des revendications précédentes, dans lequel
- le stator (14) s'étend sur un angle qui est dimensionné de telle sorte que le stator (14) s'étend exclusivement sur un côté d'une surface-limite (17) ; et dans lequel
- la surface-limite (17) est définie comme une surface tangentielle virtuelle sur un côté extérieur du porte-outil (11).

4. Dispositif de séparation de matériaux selon l'une des revendications précédentes, dans lequel
la surface-limite (17) est un plan horizontal virtuel défini comme surface tangentielle à une face inférieure du porte-outil (11) lorsque le dispositif de séparation de matériaux se trouve dans une position de travail conforme à sa destination.

5. Dispositif de séparation de matériaux selon l'une des revendications précédentes, dans lequel
- le porte-outil (11) est essentiellement symétrique en rotation ;
- le porte-outil (11) présente un rayon maximal ; et
- le stator (14) ne s'étend pas au-delà du rayon maximal du porte-outil (11) dans une direction vers le bas et dans une direction vers l'avant lorsque le dispositif de séparation de matériaux se trouve dans une position de travail conforme à sa destination.

6. Dispositif de séparation de matériaux selon l'une des revendications précédentes, le dispositif de séparation de matériaux étant un dispositif de coupe de joints, comprenant :
- un châssis (1) ; et
- au moins un train de roulement (3) pour déplacer le châssis (1),
dans lequel
- le moteur électrique (12) et le porte-outil (11) étant agencés dans une zone avant du châssis (1), vue dans une direction de déplacement principale ; et
dans lequel
- un accumulateur d'énergie électrique (18) est prévu pour alimenter le moteur électrique (12) en énergie électrique.

7. Dispositif de séparation de matériaux selon la revendication 6, dans lequel le centre de gravité de l'accumulateur d'énergie électrique (18) est situé au-dessus de l'axe de rotation du porte-outil (11).

8. Dispositif de séparation de matériaux selon la revendication 6 ou 7, dans lequel
- un logement de batterie est prévu pour recevoir l'accumulateur d'énergie électrique (18) ; et dans lequel
- l'accumulateur d'énergie électrique (18) est interchangeable.

9. Dispositif de séparation de matériaux selon l'une des revendications 6 à 8, dans lequel
- le châssis (1), par rapport à une position de travail conforme à la destination, présente une partie inférieure à hauteur du moteur électrique (12) et du porte-outil (11) ;
- le châssis (1) présente une partie supérieure qui est agencée au-dessus de la partie inférieure et qui est espacée d'au moins 400 mm de la partie inférieure.

10. Dispositif de séparation de matériaux selon l'une des revendications 6 à 9, dans lequel un dispositif de conversion (19) est prévu dans la partie supérieure ou dans la partie inférieure pour convertir un courant électrique continu provenant de l'accumulateur d'énergie électrique (18) en un courant adapté au fonctionnement du moteur électrique (12).
